# EUROPÄISCHE PATENTSCHRIFT

(11) **EP 1 944 115 B1**
(45) Veröffentlichungstag und Bekanntmachung des Hinweises auf die Patenterteilung: **15.09.2010**
(21) Anmeldenummer: 07124121.0
(22) Anmeldetag: 28.12.2007
(51) Int. Cl.: B23K 9/073, B23K 9/09, B23K 9/095, B23K 9/10

(54) **Verfahren und Vorrichtung zum Steuern des Ausgangs einer Schweissenergiequelle beim Abschmelzelektroden-Lichtbogenschweissen mit einem Zeitfenster vor dem Wiederzünden des Lichtbogens**
Process and device for controlling the output of a welding power source for arc welding with consumable electrode with a timeframe before relighting of the arc
Procédé et dispositif de contrôle de la sortie d'une source de puissance de soudage à l'arc avec électrodes consommables ayant un intervalle de temps avant le rallumage de l'arc

(30) Priorität: 11.01.2007 DE 102007002578
(43) Veröffentlichungstag der Anmeldung: 16.07.2008
(73) Patentinhaber: EWM Hightec Welding GmbH, 56271 Mündersbach (DE)
(72) Erfinder: Goecke, Sven-Frithjof, 56244 Steinen (DE); Daubach, Michael, 56566 Neuwied (DE); Knopp, Norbert, 56337 Arzbach (DE)
(74) Vertreter: Cohausz & Florack

(56) Entgegenhaltungen:
- WO-A-2006/129388
- DE-A1-102004 007 059
- JP-A- 2000 158 134
- JP-A- 2006 281 219

## Beschreibung

Die Erfindung betrifft ein Verfahren und eine Vorrichtung zum Steuern des Ausgangs einer Schweißenergiequelle beim Abschmelzelektroden-Lichtbogenschweißen, insbesondere MIG/MAG-Schweißen, oder MIG/MAG-Impulsschweißen, gemäß dem Oberbegriff der Ansprüche 1 und 12 (siehe, z.B. DE 10 2004 007059 A).

Solche Verfahren und zugehörige Vorrichtungen dienen allgemein zum Steuern des Ausgangs einer Schweißenergiequelle, bei dem abwechselnd eine Kurzschlussphase und eine Lichtbogenphase zwischen der Abschmelzelektrode und dem Werkstück stattfinden, welches Verfahren allgemein als Kurzlichtbogenschweißen bezeichnet wird. In der Lichtbogenphase wird das Elektrodenende tropfenartig aufgeschmolzen, wobei aufgrund der stetigen Drahtzufuhr und dem wachsenden Tropfenvolumen nach einer gewissen Zeit eine Berührung des Elektrodenendes mit dem Schmelzbad erfolgt. In dieser damit beginnenden Phase fließt die Schmelze von der Elektrode in das werkstoffartige Schmelzbad und die gebildete "Kurzschlussbrücke" wird durch den sich einstellenden hohen Kurzschlussstrom eingeschnürt und der Lichtbogen zündet neu. Ein Materialübergang findet dabei ausschließlich in der Kurzschlussphase statt. Im Übergangsbereich zwischen dem Ende der Kurzschlussauflösung (im Folgenden auch als "Materialübergang" bezeichnet) und dem Beginn der Wiederzündung des Lichtbogens herrschen schwer definierbare Prozessbedingungen. Aufgrund des im Endbereich der Kurzschlussphase auftretenden hohen Schweißstromes in Verbindung mit einer hohen Schweißprozessspannung kann es zu ungewünschten Schweißspritzern kommen.

Aus der EP 0 743 126 ist eine Inverterstromquelle bekannt, bei der während der abfallenden Schweißstromflanke eine Gegenspannungsquelle einem sekundärseitigen Strompfad in Reihe zuschaltbar ist, deren Polarität so gerichtet ist, dass sich ihr Spannungswert während der abfallenden Flanke zur Schweißprozessspannung hinzu addiert. Dies hat zur Folge, dass der Schweißstrom schneller auf einen niedrigen Wert abgesenkt wird als wenn er aufgrund der ohne die Gegenspannungsquelle vorhandenen Schaltungsbedingungen abklingen würde.

Aus der DE 10 2004 0007 059 A1 ist es bekannt, zwecks Erreichens einer möglichst geringen Spritzerbildung eine Vorrichtung bzw. ein Verfahren dahingehend zu verbessern, dass synchronisiert mit der Taktfrequenz der Inverterstromquelle für den Augenblickswert der Schweißprozessspannung repräsentative Messwerte erfasst werden und beim Erreichen einer ersten Vorgabebedingung für den Augenblickswert der Schweißprozessspannung eine Gegenspannung zugeschaltet wird.

Der Erfindung liegt die Aufgabe zugrunde, eine Vorrichtung dahingehend zu verbessern, dass sich die Schweißqualität weiter erhöht.

Die der Erfindung zugrundeliegende Aufgabe wird bei einem Verfahren der eingangs genannten Art dadurch gelöst, dass der für das Ende des Materialübergangs in der zweiten Betriebsphase als Auslösekriterium relevante Parameter, in Form der Schweißspannungsdifferenz ΔU, der Schweißstromdifferenz ΔI, der Leistungsdifferenz ΔP oder der Widerstanddifferenz ΔR messtechnisch erfasst und derart variiert wird, dass die Zeitdifferenz zwischen der Zuschaltung der Gegenspannung und der Wiederzündung des Lichtbogens innerhalb eines vorgebbaren Bereichs liegt, wobei der Betrag des als Auslösekriterium relevanten Parameters verändert wird, wenn die Zeitdifferenz (tᵢₛₜ) außerhalb des vorgebbaren Bereichs (t_{gu}, t_{gr}) liegt (siehe Anspruch 1).

Bei einer Vorrichtung der eingangs genannten Art wird die Aufgabe erfindungsgemäß dadurch gelöst, dass erste Messmittel zur Erfassung des für das Ende des Materialübergangs in der zweiten Betriebsphase als Auslösekriterium relevanten Parameters, in Form der Schweißspannungsdifferenz ΔU, der Schweißstromdifferenz ΔI, der Leistungsdifferenz ΔP oder der Widerstanddifferenz ΔR, dass zweite Messmittel für die Erfassung der Zeitdifferenz zwischen dem Zuschalten der Gegenspannung und der Wiederzündung des Lichtbogens und dass Regelungsmittel vorgesehen sind derart, dass durch Variation des als Auslösekriterium relevanten Parameters die Zeitdifferenz innerhalb eines vorgebbaren Bereichs einstellbar ist, wobei der Betrag des als Auslösekriterium relevanten Parameters verändert wird, wenn die Zeitdifferenz (tᵢₛₜ) außerhalb des vorgebbaren Bereichs (t_{gu}, t_{gr}) liegt (Siehe Anspruch 12).

Die erfindungsgemäße Lösung zeichnet sich dadurch aus, dass die Schweißprozessbedingungen im Übergangsbereich zwischen dem Materialübergang ("zweite Betriebsphase") und dem Wiederzünden des Lichtbogens ("nachfolgende erste Betriebsphase") dahingehend verbessert werden, dass ein optimales Zeitfenster zwischen dem Zuschalten der Gegenspannungsquelle und dem Wiederzünden des Lichtbogens eingehalten wird. Dieses Zeitfenster ist so gewählt, dass einerseits das Zuschalten der Gegenspannung nicht zu früh erfolgt, d.h. dass die Zeitdauer zwischen dem Erreichen der Auslösebedingung und damit dem Zuschalten der Gegenspannung und dem Wiederzünden des Lichtbogens zu groß wird. Andererseits ist das Zeitfenster so gewählt, dass das Zuschalten der Gegenspannung nicht zu spät erfolgt, was zur Folge hätte, dass der Strom noch nicht hinreichend abgebaut wäre, bevor das Wiederzünden des Lichtbogens erfolgte. Die Einregelung des Zeitfensters innerhalb des vorgebbaren Bereichs erfolgt dabei auf Basis des zuvor in der zweiten Betriebsphase erfassten relevanten Parameters für das Auslösekriterium am Ende des Materialübergangs. Wenn erfindungsgemäß ein Betrieb innerhalb des genannten Zeitfensters erfolgt, hat dies eine deutliche Herabsetzung der Spritzerbildung beim Schweißprozess zur Folge.

Nach der Erfindung wird als für das Ende des Materialübergangs als Auslösekriterium relevanter Parameter die Schweißspannungsdifferenz (ΔU) herangezogen.

Gemäß einer Variante hierzu wird als für das Ende des Materialübergangs als Auslösekriterium relevanter Parameter die Schweißstromdifferenz (ΔI)herangezogen.

Als eine weitere Variante wird als für das Ende des Materialübergangs als Auslösekriterium relevanter Parameter die Leistungsdifferenz (ΔP) herangezogen.

Als eine weitere Variante wird als für das Ende des Materialübergangs als Auslösekriterium relevanter Parameter die Widerstandsdifferenz (ΔR) herangezogen.

Gemäß der Erfindung wird der Wertebereich für die Zeitdifferenz zwischen der Zuschaltung der Gegenspannung und der Wiederzündung des Lichtbogens zwischen einem unteren (t_{gu}) und einem oberen (t_{go}) Grenzwert gebildet, wobei diese Grenzwerte ein sogenanntes "Zeitfenster" definieren.

Dabei werden folgende Fälle unterschieden:
a) Wenn die Zeitdifferenz innerhalb des Wertbereichs liegt, bleibt der Betrag des als Auslösekriterium relevanten Parameters unverändert.
b) Wenn die Zeitdifferenz unterhalb des unteren Wertbereichs liegt, wird der Betrag des als Auslösekriterium relevanten Parameters verändert, insbesondere sein Wert vergrößert.
c) Wenn die Zeitdifferenz oberhalb des oberen Wertbereichs liegt, wird der Betrag des als Auslösekriterium relevanten Parameters verändert, insbesondere sein Wert verkleinert.

Eine Besonderheit der erfindungsgemäßen Lösung besteht auch darin, dass die Messwerte, nämlich zum einen die Messwerte für die Zeitdifferenz oder zum anderen die Messwerte des als für das Ende des Materialübergangs als Auslösekriterium relevanten Parameters kontinuierlich erfasst werden. Eine Folge dieser Messwerte wird einer statistischen Bewertung unterzogen, was insbesondere zum Zwecke ihrer Glättung dient.

Das Ergebnis der statistischen Bewertung führt dann zum Beispiel zur Bildung des zeitlichen Mittelwertes bzw. zur Bildung des zeitlichen gleitenden Mittelwertes.

Schließlich ist nach einer Ausführungsform der Erfindung vorgesehen, dass der Beginn des Wiederzündens des Lichtbogens anhand des Überschreitens eines Schwellwertes, bevorzugt eines Spannungsschwellwertes, detektiert wird und sich dann entsprechend die nachfolgende erste Betriebsphase anschließt.

Die Erfindung wird im Folgenden anhand eines Ausführungsbeispieles erläutert. Dabei zeigen
Figur 1 das Blockschaltbild einer Schweißstromquelle gemäß dem Ausführungsbeispiel der Erfindung;
Figur 2 eine prinzipielle Darstellung zur Erläuterung der zeitlichen Verläufe der Schweißprozessspannung U und des Schweißstromes I korreliert mit den unterschiedlichen Schweißprozesszuständen;
Figur 3 einen zeitlichen Ausschnitt aus der Darstellung nach Figur 2 im Bereich zwischen dem Materialübergang und dem Wiederzünden des Lichtbogens, gemäß Ausführungsbeispiel der Erfindung, wenn die Zeit tᵢₛₜ zwischen dem Zuschalten der Gegenspannungsquelle und dem Wiederzünden des Lichtbogens innerhalb eines vorgegebenen Zeitfensters erfolgt,
Figur 4 eine gegenüber Figur 3 dahingehend variierte Darstellung, wenn das Wiederzünden des Lichtbogens zeitlich vor dem vorgegebenen Zeitfenster erfolgt,
Figur 5 eine gegenüber Figur 3 dahingehend variierte Darstellung, wenn das Wiederzünden des Lichtbogens zeitlich nach dem vorgegebenen Zeitfenster erfolgt.

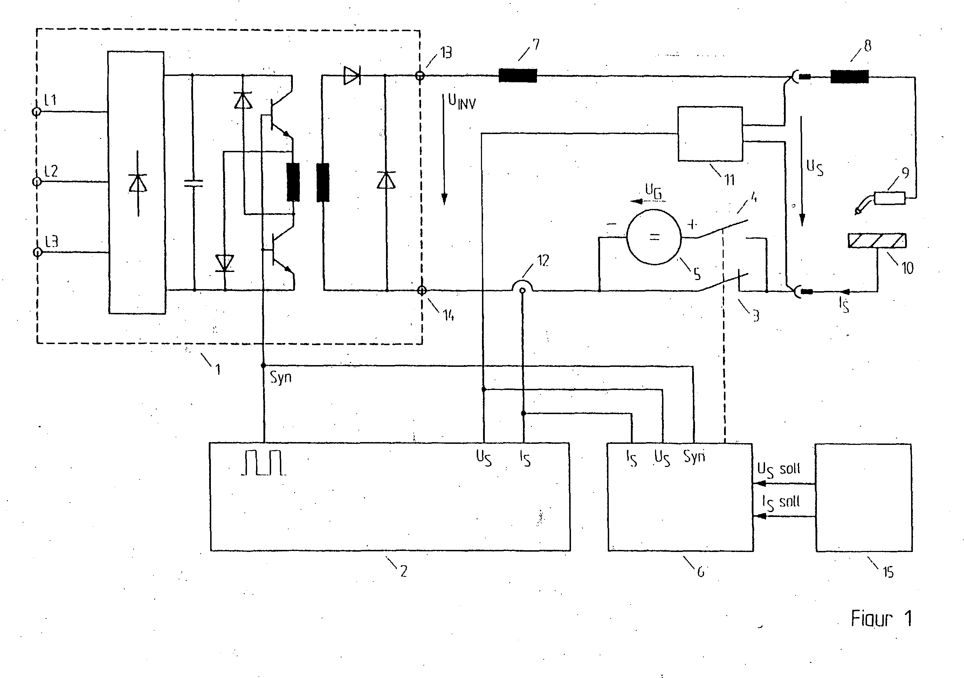

Das in Figur 1 dargestellte Blockschaltbild für ein Schweißgerät gemäß dem Ausführungsbeispiel der Erfindung zeigt zunächst eine allgemein mit dem Bezugszeichen 1 bezeichnete Inverterstromquelle, die aus einem wechselstromgespeisten Gleichrichter, einem Zwischenkreis sowie einem primärseitig wechselseitig getaktetem Stromwandler besteht, welcher sekundärseitig einen Strompfad aufweist, welcher zur Speisung des Schweißprozesses 9,10 dient. Gegenüber der auf einem Bezugspotential liegenden Gegenelektrode 10 ist mit 9 die Schweißelektrode bezeichnet. Im sekundärseitigen Strompfad der Inverterstromquelle 1 ist eine Gleichrichterdiode vorgesehen.

Im Schweißstromkreis liegt zunächst eine Drossel 7 sowie die die Leitungsinduktivität der Zuleitung zum Schweißprozess darstellende weitere Induktivität 8. Zur Entladung der aus den Induktivitäten 7 und 8 gebildeten Gesamtinduktivität während des Rückstromes dient eine Freilaufdiode.

In Reihe zum Schweißprozess 9,10 ist eine Gleichspannungsquelle 5 vorgesehen, deren Polarität, gekennzeichnet durch die Zeichen +,- so gewählt ist, dass die während der abfallenden Flanke des Schweißstromes gleichsinnig gerichtet ist zu der am Schweißprozess 9,10 anliegenden Spannung. Über das Schalterpaar 3,4 kann die Gegenspannungsquelle 5 zugeschaltet bzw. überbrückt werden, wobei bei der Überbrückung der Schalter 3 geschlossen und der Schalter 4 geöffnet und bei Wirksamkeit der Gegenspannungsquelle 5 der Schalter 3 geöffnet bzw. der Schalter 4 geschlossen ist.

Das Öffnen bzw. Schließen der Schalter 3,4 wird durch eine Steuereinheit 6 bestimmt, welcher eine Vorgabeeinheit 15 zur Vorgabe von Sollwerten U_{Ssoll}, I_{Ssoll} zugeordnet ist. Parallel zur Steuereinheit 6 ist eine Synchronisiereinheit 2 vorgesehen, welche mit der Taktfrequenz der Inverterstromquelle 1 synchronisiert ist. An den Eingang der Synchronisiereinrichtung 2 gelangt das Ausgangssignal einer ersten Detektoreinrichtung 11, welche die Schweißprozessspannung Uₛ unmittelbar an den äußeren Anschlussleitungen des Schweißgerätes 9,10 erfasst. Über eine weitere Detektoreinrichtung 12 wird der Istwert des Schweißstromes Iₛ ebenfalls jeweils als Augenblickswert erfasst und an die Synchronisiereinrichtung 2 übertragen. Die Augenblickswerte der Schweißprozessspannung Uₛ bzw. des Schweißstromes Iₛ liegen ebenso an der Steuereinrichtung 6 an. Die Vorgabeeinrichtung 15 weist Sollwerte für die Schweißprozessspannung U_{S} bzw. den Schweißstrom I_{S} auf. Diese Sollwerte werden in Zusammenhang mit den Prozessvorgaben, z.B. dem Drahtdurchmesser, dem Schweißelektrodenmaterial, dem Schweißgas oder dem verwendeten Schweißverfahren abgeleitet.

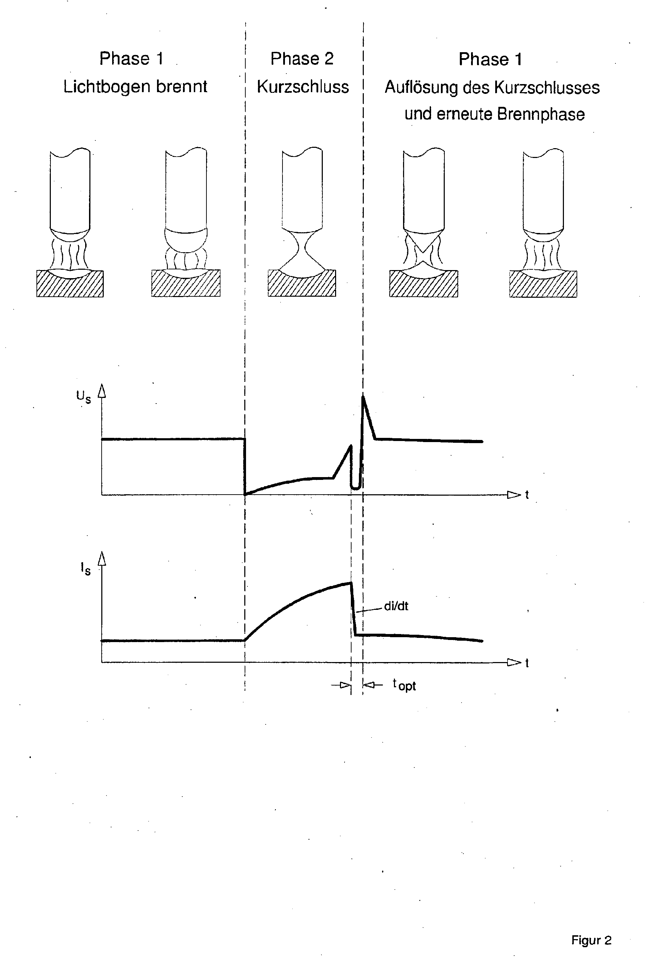

Eine Darstellung des zeitlichen Verlaufes der Schweißprozessspannung Uₛ bzw. des Schweißprozessstromes Iₛ ist Figur 2 zu entnehmen, korreliert mit den jeweiligen Zuständen des Schweißprozesses.

Die erfindungsgemäße Vorrichtung arbeitet wie folgt:

Zunächst zeigt Figur 2, dass in einer ersten Prozessphase, in der der Lichtbogen brennt (Phase 1, Lichtbogen), jedoch noch kein Materialübertrag zwischen Schweißelektrode und Werkstück erfolgt, ein nahezu konstanter Schweißstrom und eine nahezu konstante Schweißprozessspannung vorhanden sind. Im Moment der Verflüssigung des tropfenförmigen Elektrodenendes, also zu Beginn der Kurzschlussphase (Phase 2) bricht die Schweißprozessspannung zusammen und der Schweißstrom beginnt, einen Anstieg vorzunehmen. Im Verlaufe der Kurzschlussphase kommt es zu einer Einschnürung des tropfenartig aufgeschmolzenen Elektrodenbereichs und zum Ende der Kurzschlussphase hin zum sogenannten Materialübergang, der den Beginn der nächsten Phase 1 ("Lichtbogenphase") einleitet. Der Moment der Kurzschlussauflösung ("Materialübergang") ist erkennbar anhand des Auftretens eines sog. "Auslöseparameters", welcher z.B. durch einen plötzlichen Anstieg der Schweißspannung oder des Schweißstromes oder der Leistung oder des Widerstands repräsentiert ist. Die Messung des Auslöseparameters erfolgt in der Taktpause des Inverters. Durch die geeignete Festlegung der Kriterien für den Auslöseparameter wird nun erreicht, dass möglichst genau zum Zeitpunkt der Kurzschlussauflösung ("Materialübergang") die Gegenspannung in den Strompfad zugeschaltet wird, so dass nach dem Zuschalten der Gegenspannung sowohl Strom als auch Spannung absinken. Dabei kann die Steilheit der abfallenden Flanke des Schweißstroms durch die Amplitude der Gegenspannung eingestellt werden.

Das nachfolgende Wiederzünden des Lichtbogens kann dann bei niedrigem Strom und damit leistungsarm erfolgen, so dass Schweißspritzer weitgehend vermieden werden.

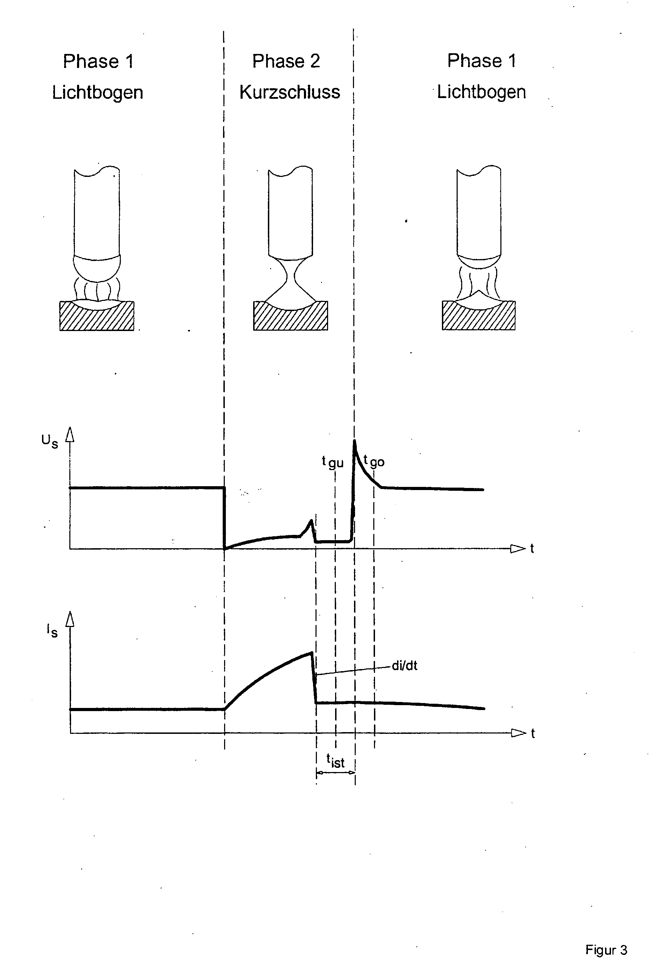

Figur 3 zeigt einen zeitlich gestreckten Verlauf der Schweißspannung Uₛ und des Schweißstromes Iₛ , insbesondere im Bereich der Übergangsphase zwischen der Kurzschlussauflösung und dem Wiederzünden. Nach der erfindungsgemäßen Lösung wird die Zeit tᵢₛₜ zwischen dem Moment des Einschaltens der Gegenspannung und dem Moment des Wiederzündens des Lichtbogens gemessen, und zwar kontinuierlich in jedem Übergangsbereich der zyklisch abwechselnden Phasen 2 und 1. Dabei werden die einzelnen Messwerte über eine geeignete statistische Funktion geglättet. Figur 3 zeigt dabei den Verlauf, der sich ergibt, wenn die Zeitdifferenz tᵢₛₜ zwischen dem Zuschalten der Gegenspannung und dem Wiederzünden innerhalb eines als optimal festgestellten Bereichs liegt, welcher durch ein Zeitfenster zwischen den Grenzwerten t_{gu} und t_{go} definiert ist, innerhalb dessen sich die Zeitdifferenz tᵢₛₜ befinden muss, um die gewünschten Prozessbedingungen zu gewährleisten.

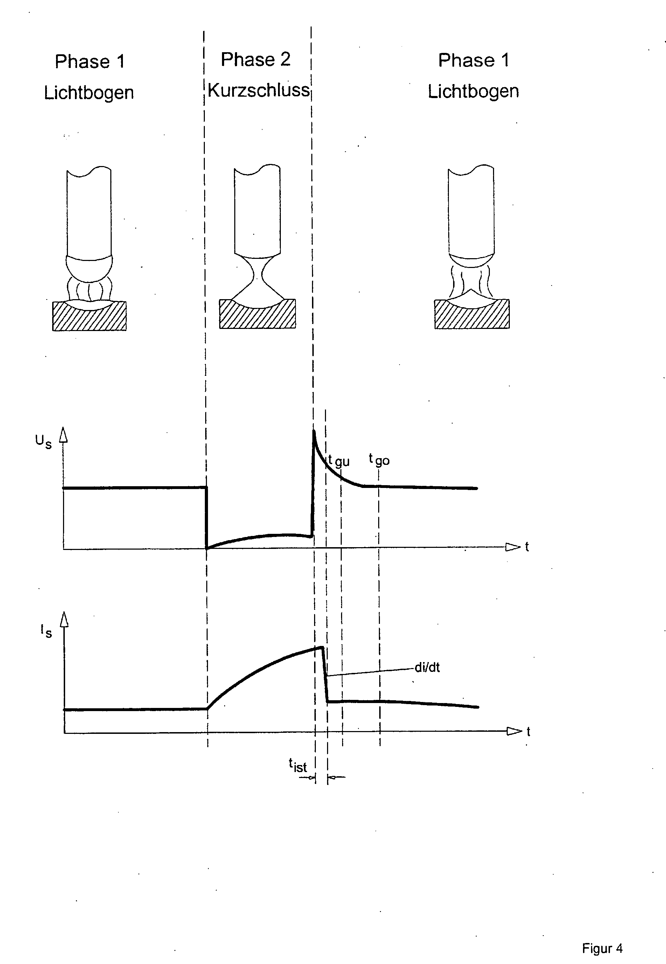

Figur 4 stellt in Unterscheidung zur Figur 3 eine Situation dar, bei der das Zuschalten der Gegenspannung zu spät erfolgt, wodurch der Strom noch nicht vollständig abgeklungen ist, und deshalb mit dem Spannungsanstieg sprunghaft eine hohe Leistung einwirkt, bevor das Wiederzünden des Lichtbogens erfolgt.

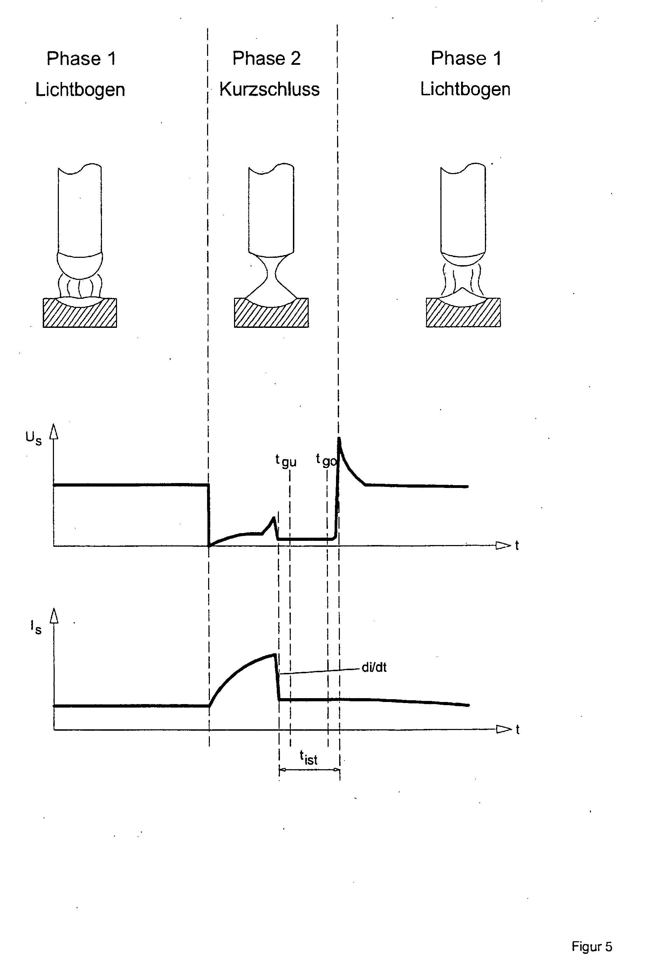

Figur 5 stellt demgegenüber eine Situation dar, bei der das Zuschalten der Gegenspannung zu früh erfolgt mit der Folge, dass im Moment des Wiederzündens des Lichtbogens der Bereich, innerhalb dem der Lichtbogen wirkt, zu stark erkaltet und es sogar zu mangelndem Wiederzünden kommt.

Die Steuereinrichtung 6, 2 nach Figur 1 ist nun erfindungsgemäß so ausgelegt, dass die als Auslösekriterium heranziehbaren Werte, insbesondere (ΔU, ΔI, ΔP, ΔR) ebenso kontinuierlich gemessen werden wie die sich an das Zuschalten der Gegenspannungsquelle bis zum Wiederzünden ablaufende Zeitdifferenz tᵢₛₜ. Stellt sich nun heraus, dass die Zeitdifferenz nicht innerhalb des gewünschten "Zeitfensters" liegt, so wird der als Auslösekriterium fungierende Parameter im nächsten Zyklus dahingehend verändert, dass die gewünschte Zeitbedingung erreicht wird. Beispielsweise wird in Figur 4 die als Auslöseparameter fungierende Differenz der Sahweißspannung erniedrigt, so dass im nächsten Prozesszyklus die Zeitdifferenz zwischen dem Zuschalten der Gegenspannung und dem Wiederzünden verlängert wird.

## Patentansprüche

1. Verfahren zum Steuern des Ausgangs einer Schweißenergiequelle beim Abschmelzelektroden-Lichtbogenschweißen, insbesondere MIG/MAG-Schweißen, oder MIG/MAG-Impulsschweißen, bei welchem in einer ersten Betriebsphase zwischen der abschmelzenden Schweißelektrode (9) und dem Werkstück (10) in einer Schutzgasatmosphäre ein Lichtbogen gezündet und die Schweißelektrode (9) tropfenartig aufgeschmolzen wird und in einer zweiten Betriebsphase das aufgeschmolzene Material auf das Werkstück (10) übergeht, wobei die Betriebsphasen zeitlich alternierend stattfinden und im Übergangsbereich von der zweiten Betriebsphase auf die nachfolgende erste Betriebsphase beim Auftreten eines für den Materialübergang relevanten Parameters zur Unterstützung der Steilheit des Stromabfalls eine der Schweißspannung entgegengerichtete Gegenspannung zugeschaltet wird, **dadurch gekennzeichnet, dass** der für das Ende des Materialübergangs in der zweiten Betriebsphase als Auslösekriterium relevante Parameter in Form der Schweißspannungsdifferenz ΔU, der Schweißstromdifferenz ΔI, der Leistungsdifferenz ΔP oder der Widerstandsdifferenz ΔR messtechnisch erfasst und derart variiert wird, dass die Zeitdifferenz (tᵢₛₜ) zwischen der Zuschaltung der Gegenspannung und der Wiederzündung des Lichtbogens innerhalb eines vorgebbaren Bereichs (t_{gu}, t_{go}) liegt, wobei der Betrag des als Auslösekriterium relevanten Parameters verändert wird, wenn die Zeitdifferenz (tᵢₛₜ) außerhalb des vorgebbaren Bereichs (t_{gu}, t_{go}) liegt.

2. Verfahren nach Anspruch 1, **dadurch gekennzeichnet, dass** der Wertebereich für die Zeitdifferenz zwischen der Zuschaltung der Gegenspannung und der Wiederzündung des Lichtbogens zwischen einem unteren t_{gu} und einem oberen t_{go} Grenzwert gebildet wird.

3. Verfahren nach einem der Ansprüche 1 oder 2, **dadurch gekennzeichnet, dass** der Betrag des als Auslösekriterium relevanten Parameters unverändert bleibt, wenn die Zeitdifferenz (tᵢₛₜ) innerhalb des Wertebereichs (t_{gu}, t_{go}) liegt.

4. Verfahren nach einem der Ansprüche 1 bis 3, **dadurch gekennzeichnet, dass** der Betrag des als Auslösekriterium relevanten Parameters vergrößert wird, wenn die Zeitdifferenz (tᵢₛₜ) unterhalb des unteren Grenzwertes t_{gu} liegt.

5. Verfahren nach einem der Ansprüche 1 bis 3, **dadurch gekennzeichnet, dass** der Betrag des als Auslösekriterium relevanten Parameters verkleinert wird, wenn die Zeitdifferenz (tᵢₛₜ) oberhalb des oberen Grenzwertes t_{go} liegt.

6. Verfahren nach einem der Ansprüche 1 bis 5, **dadurch gekennzeichnet, dass** die messtechnische Erfassung des für das Ende des Materialübergangs in der zweiten Betriebsphase als Auslösekriterium relevanten Parameters, (ΔU, ΔI, ΔP, ΔR), kontinuierlich erfolgt.

7. Verfahren nach Anspruch 6, **dadurch gekennzeichnet, dass** die kontinuierliche messtechnische Erfassung des für das Ende des Matrialübergangs in der zweiten Betriebsphase als Auslösekriterium relevanten Parameters (ΔU, ΔI, ΔP) in der Taktpause des Inverters der Schweißenergiequelle erfolgt.

8. Verfahren nach Anspruch 6, **dadurch gekennzeichnet, dass** die kontinuierlich erfassten Messwerte der Zeitdifferenz (tᵢₛₜ) einer statistischen Bewertung unterzogen werden.

9. Verfahren nach Anspruch 6, **dadurch gekennzeichnet, dass** die statistische Bewertung zur Bildung des zeitlichen Mittelwertes führt.

10. Verfahren nach Anspruch 6, **dadurch gekennzeichnet, dass** die statistische Bewertung zur Bildung des gleitenden zeitlichen Mittelwertes führt.

11. Verfahren nach einem der Ansprüche 1 bis 10, **dadurch gekennzeichnet, dass** der Beginn der Wiederzündung des Lichtbogens anhand des Überschreitens eines Schwellwertes, insbesondere eines Spannungsschwellwertes, detektierbar ist.

12. Vorrichtung zum Steuern des Ausgangs einer Schweißenergiequelle beim Abschmelzelektroden-Lichtbogenschweißen, insbesondere MIG/MAG-Schweißen, oder MIG/MAG-Impulsschweißen, enthaltend eine Steuereinrichtung (2, 6) mittels der der Schweißprozess, insbesondere die Schweißspannung und der Schweißstrom, dahingehend steuerbar ist, dass in einer ersten Betriebsphase ein Lichtbogen gezündet und die Schweißelektrode (9) tropfenartig aufgeschmolzen wird und in einer zweiten Betriebsphase das aufgeschmolzene Material von der Schweißelektrode (9) auf das Werkstück (10) übergeht, wobei die Betriebsphasen zeitlich alternierend stattfinden und wobei im Übergangsbereich von der zweiten Betriebsphase auf die nachfolgende erste Betriebsphase beim Auftreten eines für den Materialübergang relevanten Parameters zur Unterstützung der Steilheit des Stromabfalls eine der Schweißspannung entgegengerichtete Gegenspannung zugeschaltet wird, **dadurch gekennzeichnet, dass** erste Messmittel zur Erfassung des für das Ende des Materialübergangs in der zweiten Betriebsphase als Auslösekriterium relevanten Parameters in Form der Schweißspannungsdifferenz ΔU, der Schweißstromdifferenz ΔI, der Leistungsdifferenz ΔP oder der Widerstandsdifferenz ΔR, dass zweite Messmittel für die Erfassung der Zeitdifferenz (tᵢₛₜ) zwischen dem Zuschalten der Gegenspannung und der Wiederzündung des Lichtbogens und dass Regelungsmittel vorgesehen sind derart, dass durch Variation des als Auslösekriterium relevanten Parameters die Zeitdifferenz (tᵢₛₜ) innerhalb eines vorgebbaren Bereichs (t_{gu}, t_{go}) einstellbar ist, wobei der Betrag des als Auslösekriterium relevanten Parameters verändert wird, wenn die Zeitdifferenz (tᵢₛₜ) außerhalb des vorgebbaren Bereichs (t_{gu}, t_{go}) liegt.

13. Vorrichtung nach Anspruch 14, **dadurch gekennzeichnet**, **dadurch gekennzeichnet, dass** die Schweißenergiequelle eine wechselstromgespeiste wechselweise getaktete Inverterstromquelle aufweist, die mindestens einen Strompfad zur Versorgung des Schweißprozesses speist, wobei in Reihe zum Schweißprozess eine Gleichrichterdiode und mindestens eine Drossel und parallel zum Schweißprozess eine Freilaufdiode vorgesehen sind.

14. Vorrichtung nach Anspruch 12 oder 13, **dadurch gekennzeichnet, dass** innerhalb des mindestens einen Strompfades über Steuermittel (6) eine der Inverterspannung (Uinv) bei aufsteigender Schweißstromflanke entgegengerichtete Gegenspannungsquelle (5) in Reihe zuschaltbar ist.

15. Vorrichtung nach einem der vorhergehenden Ansprüche 12 bis 14, **dadurch gekennzeichnet, dass** die Messmittel teilweise oder ganz mittels Software ausgeführt werden.

## Claims

1. A method for controlling the output of a welding energy source in the case of consumable electrode arc welding, particularly MIG/MAG welding or MIG/MAG pulsed-current welding, in which in a first operating phase an arc is ignited between the welding electrode (9) which is consumed and the workpiece (10) in a protective gas atmosphere and the welding electrode (9) is fused in a drop-like manner and in a second operating phase the fused material transfers onto the workpiece (10), wherein the operating phases take place in a temporally alternating manner and a counter voltage directed oppositely to the welding voltage is connected in the transition zone from the second operating phase to the following first operating phase in the case of the occurrence of a parameter relevant for the material transfer for supporting the steepness of the current drop, **characterised in that** the parameter, which is relevant in the second operating phase as a trigger criterion for the end of the material transfer, is measured in the form of the welding voltage difference ΔU, the welding current difference ΔI, the power difference ΔP or the resistance difference ΔR and is varied in such a manner that the time difference (t_{act}) between the connection of the counter voltage and the re-ignition of the arc lies within a predeterminable range (t_{gu}, t_{go}), wherein the value of the parameter which is relevant as a trigger criterion is changed if the time difference (t_{act}) lies outside of the predeterminable range (t_{gu}, t_{go}).

2. The method according to Claim 1, **characterised in that** the value range for the time difference between the connection of the counter voltage and the re-ignition of the arc is formed between a lower t_{gu} and an upper t_{go} limit value.

3. The method according to any one of Claims 1 or 2, **characterised in that** the value of the parameter which is relevant as a trigger criterion remains unchanged if the time difference (t_{act}) lies within the value range (t_{gu}, t_{go}).

4. The method according to any one of Claims 1 to 3, **characterised in that** the value of the parameter which is relevant as a trigger criterion is increased if the time difference (t_{act}) lies below the lower limit value t_{gu}.

5. The method according to any one of Claims 1 to 3, **characterised in that** the value of the parameter which is relevant as a trigger criterion is reduced if the time difference (t_{act}) lies above the upper limit value t_{go}.

6. The method according to any one of Claims 1 to 5, **characterised in that** the measurement of the parameter (ΔU, ΔI, ΔP, ΔR), which is relevant as a trigger criterion for the end of the material transfer in the second operating phase, takes place continuously.

7. The method according to Claim 6, **characterised in that** the continuous measurement of the parameter (ΔU, ΔI, ΔP), which is relevant as a trigger criterion for the end of the material transfer in the second operating phase, takes place in the clock-pulse space of the inverter of the welding energy source.

8. The method according to Claim 6, **characterised in that** the continuously captured measurement values of the time difference (t_{act}) are subjected to a statistical evaluation.

9. The method according to Claim 6, **characterised in that** the statistical evaluation leads to the formation of the temporal mean value.

10. The method according to Claim 6, **characterised in that** the statistical evaluation leads to the formation of the floating temporal mean value.

11. The method according to any one of Claims 1 to 10, **characterised in that** the start of the re-ignition of the arc can be detected on the basis of the exceeding of a threshold value, particularly of a voltage threshold value.

12. A device for controlling the output of a welding energy source in the case of consumable electrode arc welding, particularly MIG/MAG welding or MIG/MAG pulsed-current welding, containing a control device (2, 6), by means of which the welding process, particularly the welding voltage and the welding current, can be controlled to the effect that in a first operating phase an arc is ignited and the welding electrode (9) is fused in a drop-like manner and in a second operating phase the fused material transfers from the welding electrode (9) onto the workpiece (10), wherein the operating phases take place in a temporally alternating manner and wherein a counter voltage directed oppositely to the welding voltage is connected in the transition zone from the second operating phase to the following first operating phase in the case of the occurrence of a parameter relevant for the material transfer for supporting the steepness of the current drop, **characterised in that** first measurement means for capturing the parameter, which is relevant in the second operating phase as a trigger criterion for the end of the material transfer, in the form of the welding voltage difference ΔU, the welding current difference ΔI, the power difference ΔP or the resistance difference ΔR, **in that** second measurement means for the capturing of the time difference (t_{act}) between the connection of the counter voltage and the re-ignition of the arc and **in that** regulation means are provided in such a manner that by varying the parameter relevant as a trigger criterion, the time difference (t_{act}) can be set within a predeterminable range (t_{gu}, t_{go}), wherein the value of the parameter relevant as trigger criterion is changed if the time difference (t_{act}) lies outside of the predeterminable range (t_{gu}, t_{go}).

13. The device according to Claim 14, **characterised in that** the welding energy source has an AC-powered inverter current source which is alternately pulsed and feeds at least one current path for supplying the welding process, wherein a rectifier diode and at least one inductor are provided in series to the welding process and a flywheel diode is provided in parallel to the welding process.

14. The device according to Claim 12 or 13, **characterised in that** a counter voltage source (5), which is directed oppositely to the inverter voltage (Uinv) in the case of rising welding current slope, can be connected in series within the at least one current path via control means (6).

15. The device according to any one of the preceding Claims 12 to 14, **characterised in that** the measurement means are realised in part or entirely by means of software.

## Revendications

1. Procédé pour commander la sortie d'une source d'énergie de soudage pour le soudage à l'arc avec électrode fusible, en particulier le soudage MIG/MAG ou le soudage par pulsations MIG/MAG, avec lequel un arc est allumé dans une première phase de fonctionnement entre l'électrode de soudage (9) fusible et la pièce (10) dans une atmosphère contrôlée et l'électrode de soudage (9) est fondue à la façon d'une goutte et le matériau fondu passe dans une seconde phase de fonctionnement à la pièce (10), les phases de fonctionnement se déroulant en alternance dans le temps et une contre-tension orientée dans le sens contraire à la tension de soudage étant mise en circuit dans la zone de transition de la seconde phase de fonctionnement à la première phase de fonctionnement consécutive en cas d'apparition d'un paramètre important pour le transfert de matériau pour soutenir la pente de la panne de secteur, **caractérisé en ce que** le paramètre important pour la fin du transfert de matériau dans la deuxième phase de fonctionnement comme critère de déclenchement est enregistré par des appareils de mesure sous la forme de la différence de tension de soudage ΔU, de la différence de courant de soudage ΔI, de la différence de puissance ΔP ou de différence de résistance ΔR et est modifié de telle sorte que la différence de temps (tᵢₛₜ) entre la mise en circuit de la contre-tension et le réallumage de l'arc se situe à l'intérieur d'une plage (t_{gu}, t_{go}) prédéfinissable, la valeur du paramètre important comme critère de déclenchement étant modifiée lorsque la différence de temps (tᵢₛₜ) se situe en dehors de la plage prédéfinissable (t_{gu}, t_{go}).

2. Procédé selon la revendication 1, **caractérisé en ce que** la plage de valeurs pour la différence de temps entre la mise en circuit de la contre-tension et le réallumage de l'arc est formée entre une valeur limite t_{gu} inférieure et une valeur limite t_{go} supérieure.

3. Procédé selon l'une quelconque des revendications 1 ou 2, **caractérisé en ce que** la valeur du paramètre important comme critère de déclenchement reste inchangée lorsque la différence de temps (tᵢₛₜ) se situe à l'intérieur de la plage de valeurs (t_{gu}, t_{go}).

4. Procédé selon l'une quelconque des revendications 1 à 3, **caractérisé en ce que** la valeur du paramètre important comme critère de déclenchement est augmentée lorsque la différence de temps (tᵢₛₜ) se situe au-dessous de la valeur limite t_{gu} inférieure.

5. Procédé selon l'une quelconque des revendications 1 à 3, **caractérisé en ce que** la valeur du paramètre important comme critère de déclenchement est réduite lorsque la différence de temps (tᵢₛₜ) se situe au-dessous de la valeur limite t_{go} supérieure.

6. Procédé selon l'une quelconque des revendications 1 à 5, **caractérisé en ce que** l'enregistrement par des appareils de mesure du paramètre (ΔU, ΔI, ΔP, ΔR) important pour la fin du transfert de matériau dans la deuxième phase de fonctionnement comme critère de déclenchement s'effectue de façon continue.

7. Procédé selon la revendication 6, **caractérisé en ce que** l'enregistrement continu par des appareils de mesure du paramètre (ΔU, ΔI, ΔP) important pour la fin du transfert de matériau dans la seconde phase de fonctionnement comme critère de déclenchement s'effectue dans la pause de synchronisation de l'inverseur de la source d'énergie de soudage.

8. Procédé selon la revendication 6, **caractérisé en ce que** les valeurs de mesure enregistrées en continu de la différence de temps (tᵢₛₜ) sont soumises à une évaluation statistique.

9. Procédé selon la revendication 6, **caractérisé en ce que** l'évaluation statistique aboutit à la formation de la moyenne glissante dans le temps.

10. Procédé selon la revendication 6, **caractérisé en ce que** l'évaluation statistique aboutit à la formation de la valeur moyenne dans le temps glissante.

11. Procédé selon l'une quelconque des revendications 1 à 10, **caractérisé en ce que** le début du réallumage de l'arc peut être détecté à l'aide du dépassement d'une valeur seuil, en particulier d'une valeur seuil de tension.

12. Dispositif pour commander la sortie d'une source d'énergie de soudage dans le cas du soudage à l'arc avec électrode fusible, en particulier du soudage MIG/MAG ou du soudage par pulsations MIG-/MAG, contenant un dispositif de commande (2,6) au moyen duquel le processus de soudage, en particulier la tension de soudage et le courant de soudage, peut être commandé en ce sens que, dans une première phase de fonctionnement, un arc est allumé et l'électrode de soudage (9) est fondue à la façon d'une goutte et, dans une seconde phase de fonctionnement, le matériau fondu passe de l'électrode de soudage (9) à la pièce (10), les phases de fonctionnement ayant lieu en alternance dans le temps et une contre-tension orientée dans le sens contraire à la tension de soudage étant mise en circuit dans la phase de transition de la seconde phase de fonctionnement à la première phase de fonctionnement consécutive en cas d'apparition d'un paramètre important pour le transfert de matériau pour soutenir la pente de la panne de secteur, **caractérisé en ce que** des premiers moyens de mesure sont prévus pour l'enregistrement du paramètre important pour la fin du transfert de matériau dans la seconde phase de fonctionnement comme critère de déclenchement sous la forme de la différence de tension de soudage ΔU, de la différence de courant de soudage ΔI, de la différence de puissance ΔP ou de la différence de résistance ΔR, **en ce que** des seconds moyens de mesure sont prévus pour l'enregistrement de la différence de temps (tᵢₛₜ) entre la mise en circuit de la contre-tension et le réallumage de l'arc et **en ce que** des moyens de réglage sont prévus de telle sorte que, par variation du paramètre important comme critère de déclenchement, la différence de temps (tᵢₛₜ) peut être réglée dans les limites d'une plage prédéfinissable (t_{gu}, t_{go}), la valeur du paramètre important comme critère de déclenchement étant modifiée lors que la différence de temps (tᵢₛₜ) se situe en dehors de la plage prédéfinissable (t_{gu}, t_{go}).

13. Dispositif selon la revendication 14, **caractérisé en ce que** la source d'énergie de soudage présente une source de courant d'inverseur synchronisée en alternance et alimentée par un courant alternatif, qui alimente au moins un trajet de courant pour l'alimentation du processus de soudage, une diode de redressement et au moins une bobine de choc étant prévues en série avec le processus de soudage et une diode de marche à vide étant prévue parallèlement au processus de soudage.

14. Dispositif selon la revendication 12 ou 13, **caractérisé en ce qu'**une source de contre-tension (5) orientée dans le sens contraire à la tension d'inverseur (Uinv) sur le flanc montant du courant de soudage peut être mise en circuit en série à l'intérieur du au moins un trajet de courant à l'aide de moyens de commande (6).

15. Dispositif selon l'une quelconque des revendications 12 à 14, **caractérisé en ce que** les moyens de mesure sont réalisés en partie ou complètement au moyen de logiciels.
